# EUROPEAN PATENT SPECIFICATION

(11) **EP 1 783 760 B1**
(45) Date of publication and mention of the grant of the patent: **06.05.2009**
(21) Application number: 06300986.4
(22) Date of filing: 27.09.2006
(51) Int. Cl.: G11B 7/09

(54) **Appliance for reading from and/or writing to optical recording media**
Vorrichtung zum Lesen von und/oder Schreiben auf optischen Aufzeichnungsmedien
Appareil destiné à lire un support d'enregistrement optique et/ou à écrire sur ce dernier

(30) Priority: 07.11.2005 EP 05110423
(43) Date of publication of application: 09.05.2007
(73) Proprietor: THOMSON Licensing S.A., 92100 Boulogne-Billancourt (FR)
(72) Inventor: Bammert, Michael, 78739 Hardt (DE); Suzuki, Tsuneo, 78087 Mönchweiler (DE); Dupper, Rolf, 78050 Villingen-Schwenningen (DE)
(74) Representative: Thies, Stephan

(56) References cited:
- EP-A- 0 348 845
- US-A- 4 547 871
- US-A- 4 568 142
- US-A- 4 633 456
- US-A- 4 759 005
- US-A- 4 766 583
- US-A- 4 813 033
- US-A- 4 818 066
- US-A1- 2004 130 989

## Description

The present invention relates to an appliance for reading from and/or writing to optical recording media, such as CDs, DVDs or the like.

US-4759005 discloses an optical head apparatus for recording and reproducing data, comprising a base which is moveable in a prescribed direction, a movable body comprising a lens which is moveable in relation to the base. A pair of magnets fixed to the side surface of the movable body and a pair of position adjustment coils attached to the base operate together to move the moveable body in a prescribed direction. The coils are wound such that surfaces formed by loops of the coils are vertical to the direction of magnetization of the magnets.

US-4813033 discloses an optical scanning unit capable of movement in tracking direction and in focusing direction. A first partial element is disclosed which can exclusively move in focusing direction, a second partial element is disclosed which can move exclusively in tracking direction. A two axis electromagnetic actuator including balanced, crossed, electro-magnetic coil structures is supported by two set of leaf springs.

US-4818066 discloses an objective lens driving device which is moveable in the direction of the optical axis of the objective lens (focusing direction) and moveable in the direction perpendicular to the optical axis of the objective lens (tracking direction).

EP-0348845 discloses an object lens supporting mechanism having a crossing leaf spring for supporting an objective lens holder in a tracking direction.

US-4547871 discloses an optical scanning device for reproducing information of a video or audio disc for causing a light spot to perform a focusing operation and a tracking operation.

US-4633456 discloses a two axis electromagnetic actuator using a cross coiled structure for moving in two orthogonal directions.

US-4766583 discloses an optical pickup device comprising an optical lens which is carried on a support member which is coupled with a base through a coupling unit. The coupling unit has a first rotation axis in tracking direction and a second rotation axis in focusing direction.

US-4568142 discloses an objective lens driving apparatus for driving a body including an objective lens in focusing direction along the optical axis and in tracking direction perpendicular to the optical axis.

These documents are reflecting the preamble of claim 1. US-B1-6,621,618 discloses an appliance for reading from and/or writing to optical recording media, which has an optical scanning unit with an objective lens which is suspended such that it can move in two degrees of freedom.

The object of the invention is to propose an improved appliance of this kind.

The invention provides for the scanning unit to have a first and a second partial element, with the first partial element being suspended to a holding element such that it can move exclusively in the first degree of freedom relatively to said holding element, while the second partial element is suspended to said first partial element such that it can move in the second degree of freedom relatively to said first partial element. The first partial element has an actuator attached to it in order to produce an influence in the first degree of freedom, and the second partial element has an actuator attached to it in order to produce an influence in the second degree of freedom and the two elements are spatially separated. This has the advantage that the two degrees of freedom are decoupled; disturbance influences on the scanning unit do not act on one degree of freedom or act only to a greatly reduced extent on the other degree of freedom.

The first degree of freedom advantageously corresponds to a tracking direction, that is to say a direction parallel to the plane of the optical recording medium, and essentially at right angles to the tracks on the optical recording medium, and the second degree of freedom corresponds to a focusing direction, that is to say essentially at right angles to the plane of the optical recording medium. It is particularly advantageous to actually decouple these degrees of freedom from one another.

The invention provides for the first partial element to have one or more suspension elements. One suspension element is in this case attached to a base, with the suspension element being designed such that it can move in the first degree of freedom, and to be stiff in the other degrees of freedom. This has the advantage of a particularly simple configuration for the decoupling of the degrees of freedom.

The invention also provides for the second partial element to be attached to the first partial element by one or more suspension means, with the suspension means being designed such that it can move in the second degree of freedom, and to be stiff in the other degrees of freedom. This two-stage arrangement makes it possible to achieve the desired decoupling in a simple manner.

The invention provides for the one or more suspension elements for the first partial element to allow a greater movement distance than the one or more suspension means for the second partial element. Suspension means and/or suspension elements are designed in a corresponding manner. This has the advantage not only that a long maximum movement distance is made possible corresponding to the first degree of freedom, but also that a comparatively short maximum movement distance is made possible corresponding to the second degree of freedom. This is particularly desirable if only a relatively small maximum movement distance is desired for the second degree of freedom, as is the case by way of example for a focusing actuator, in comparison to a tracking actuator. The increased maximum movement distance in the tracking actuator that is achieved in this way makes it possible to dispense with a separate coarse drive for tracking. This is particularly worthwhile in appliances for small-diameter optical recording media.

The suspension element or elements and/or the one or more suspension means are/is advantageously in the form of a leaf spring or leaf springs. Leaf springs can be handled particularly easily, and are low-cost elements.

The first partial element is advantageously provided with an actuator in order to produce an influence in the first degree of freedom, and the second partial element with an actuator in order to produce an influence in the second degree of freedom. Actuator coils are provided in particular in this case for interaction with magnets which are arranged in a fixed position on the base. Other noncontacting actuators, such as capacitive actuators, ultrasound motors or the like, can also be used in this case. The spatial decoupling of the actuator functions for the various degrees of freedom simplifies the design of the appliance, as well as the drive for the actuators.

The invention also provides for the first partial element to have a balancing mass which is arranged opposite the point of action of the second partial element. This has the advantage of increased stability, as a result of the mass balancing. The balancing mass is advantageously formed by the actuator, for example actuator coils. The balancing mass may alternatively also be a permanent magnet, in which case the cores are then arranged on the base. This has the advantage of the balancing mass having a small volume, and of a reduced number of electrical power supplies to the first and second partial elements.

Further advantages of the invention will also become evident from the following description of exemplary embodiments. In the figures:
- Figure 1: shows a three-dimensional view of a scanning unit for an appliance according to the invention;
- Figure 2: shows a further three-dimensional view, corresponding to Figure 1;
- Figure 3: shows a side view corresponding to Figure 1;
- Figure 4: shows a plan view corresponding to Figure 1; and
- Figure 5: shows a three-dimensional view of an alternative scanning unit according to the invention.

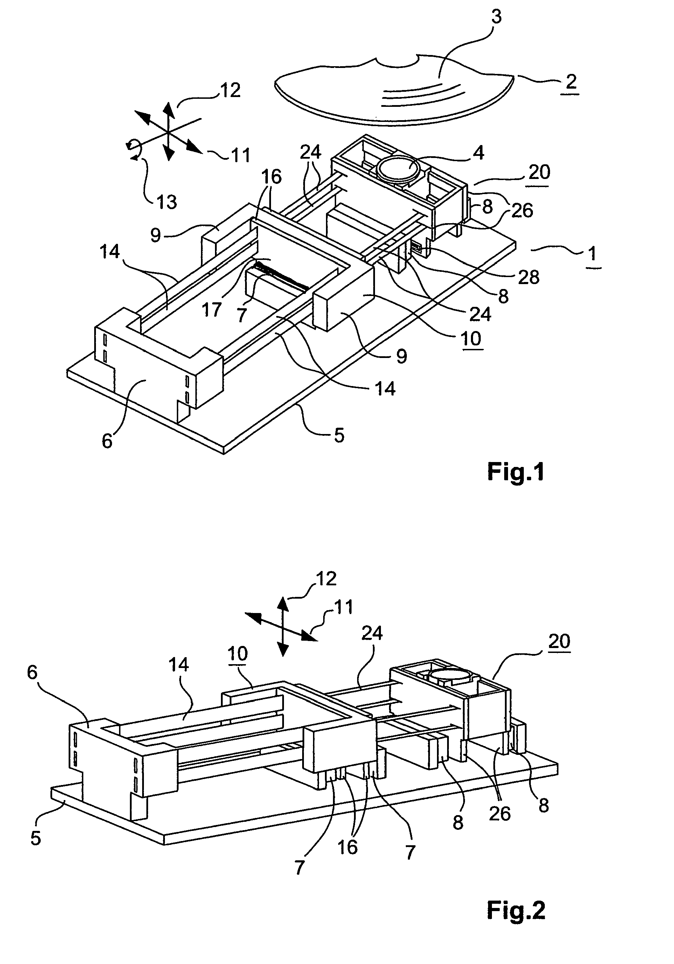

Figure 1 shows a scanning unit 1 for an appliance according to the invention. Part of an optical recording medium 2 is illustrated, and tracks 3 of the optical recording medium, which run on the same plane as the optical recording medium 2, are indicated. The scanning unit 1 has an objective lens 4 which can move in a plurality of degrees of freedom. The first degree of freedom is indicated by means of an arrow 11, and relates to a movement parallel to the surface of the recording medium 2, and essentially at right angles to the tracks 3, that is to say crossing the tracks 3. A second degree of freedom is indicated by means of the arrow 12 and corresponds essentially to a movement at right angles to the surface of the recording medium 2. A third degree of freedom is indicated by means of the arrow 13 and corresponds to rotation about an axis at right angles to the plane which is covered by the arrow 11 and the arrow 12. This is a so-called tilting movement.

The scanning unit 1 has a fixed base 5 which is provided with a holding element 6. A first partial element 10 is mounted on the holding element 6 by means of suspension elements 14. The suspension elements 14 are in the form of leaf springs. The edge of the leaf springs is shown at the top and at the bottom in the figure, so that the suspension elements 14 allow the first partial element 10 to move in the direction of the arrow 11, that is to say in the first degree of freedom. A second partial element 20 is mounted on the first partial element 10 by suspension means 24. The suspension means 24 are likewise in the form of leaf springs, but in this case have their flat faces pointing upwards and downwards. These in consequence allow the second partial element 20 to move in the direction of the second degree of freedom, as indicated by the arrow 12. The first partial element 10 has balancing masses 9 on the side opposite the point of action of the suspension means 24. This partial element 10 also has holding plates 16, which are preferably in the form of a printed circuit board and are provided with printed coils 17 in their lower area. The printed coils 17 interact with permanent magnets 7, which are mounted on the base 5, in order to exert a greater or lesser force in the direction of the first degree of freedom 11, depending on the current flow in the coils 17. The second partial element 20 is likewise provided with holding plates 26, which have printed coils 28 in their lower area. The coils 28 interact with permanent magnets 8 which are mounted on the base 5, in order to exert a force in the focusing direction, that is to say corresponding to the second degree of freedom 12. Suitable design of the coils 28 and an appropriate drive also allow a tilting movement, corresponding to the third degree of freedom 13.

Figure 2 shows the scanning unit from Figure 1 from a different viewing angle. As can be seen, the second partial element 20, which is used as the holder for the lens 4, is not connected by means of a continuous mounting element to the holding element 6, and thus to the base 5, but is connected in two stages via the suspension elements 14 and the suspension means 24. The suspension elements 14 are longer than the suspension means 24, thus allowing a longer movement distance in the direction of the arrow 11 than in the direction of the arrow 12. In contrast to conventional suspensions via wires with a constant cross section, which allow not only greater deflection in the direction of the arrow 11 but also in the direction of the arrow 12, which would lead to an unstable behaviour, susceptible to oscillation, in the direction of the arrow 12, the invention results in the maximum possible deflection in the tracking direction, that is to say in the direction of the arrow 11, but maintains the normal stability in the focusing direction, that is to say in the direction of the arrow 12. The greater movement range in the direction of the arrow 11 makes it possible to dispense with a coarse drive for a two-stage tracking system, thus resulting in cost and space savings. The appliance according to the invention is distinguished in that the long lever arm of the suspension elements 14 results in a substantial movement in the tracking direction. In this case, the actuating units for focusing, comprising coils 28 and permanent magnets 8, as well as for tracking, comprising coils 17 and permanent magnets 7, are spatially split, in order to achieve adequate stability and high sensitivity. A high degree of flexibility is provided for the definition of the maximum movement distance in the tracking direction, by variation of the magnet width and/or of the return path width in the area of the first partial element 10. This design allows movement distances of up to ±7 millimetres to be achieved without any problems, thus ensuring a complete tracking scanning capability of an optical recording medium with a diameter of about 30 millimetres. A further advantage of the invention is that, because the suspension elements 14 are in the form of leaf springs, this avoids any undesirable focusing movement, while the suspension means 24 which are likewise in the form of leaf springs prevent any undesirable tracking movement. This likewise contributes to the stability of the system. The size relationships of the suspension elements 14 and suspension means 24, which are in the form of leaf springs, are about 1:5 to 1:10 for the ratio of the edge face to the broad face. Since the bending forces occur with the third power, the force ratios are 1:125 even for a size ratio of 1:5. This is sufficient to prevent movement in an undesired direction.

It is also possible to see the permanent magnets 7, which are arranged on both sides of the holding plates 16, as well as the permanent magnets 8, which are arranged in a corresponding manner on both sides of the holding plates 26. Corresponding elements to those in Figure 1 are not necessarily provided with reference symbols once again.

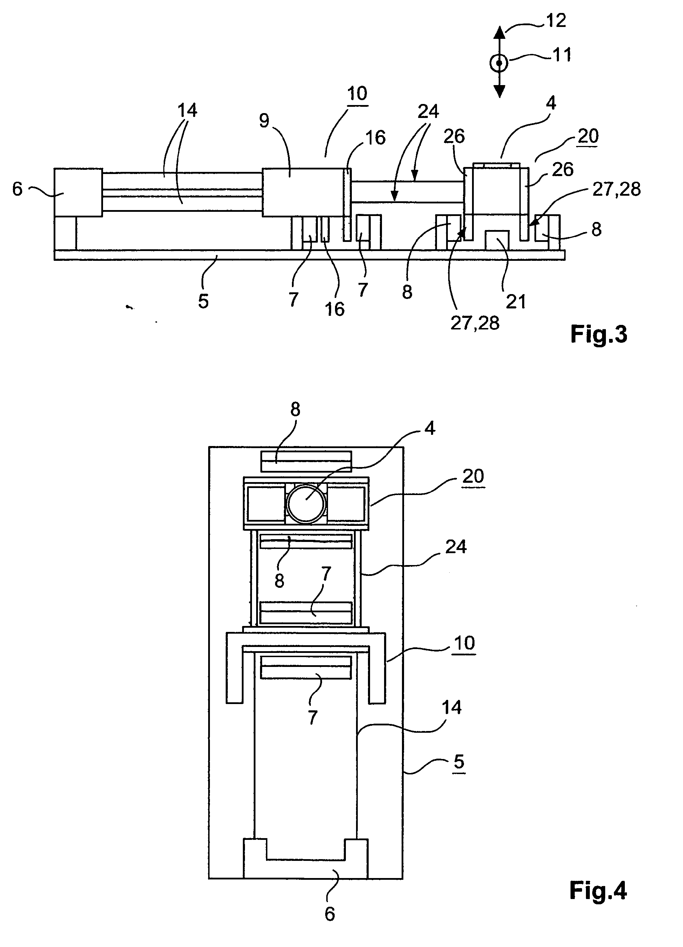

Figure 3 shows a side view of the scanning unit shown in Figure 1. In contrast to Figure 1, the suspension means 24 are in this case not in the form of leaf springs, but are in the form of wires with a round cross section. This makes it possible for the second partial element 20 to also move in the tracking direction, corresponding to the arrow 11, in addition to the focusing direction, corresponding to the arrow 12. The maximum movement distance in the direction of the arrow 11 is thus further increased. Corresponding coils 27, in addition to the coils 28, are provided for this purpose on the holding plates 26. In this embodiment, so to speak, the normal coarse tracking drive is replaced by the suspension of the first partial element 10, while the fine tracking drive and focusing drive are provided by means of the second partial element 20.

As can likewise be seen, the suspension elements 14 are located above the upper edge of the permanent magnets 7, so that they do not come into contact, even on deflection of the partial element 10. A corresponding situation applies to the suspension means 24, which are sufficiently far away from the permanent magnets 8 that, even with the maximum deflection of the second partial element 20 in the direction of the arrow 12 or in the direction of the arrow 11, there is no risk of collision. An optics unit 21 can be seen underneath the second partial element 20, that is mounted on the base 5 and has light production means for production of a light beam, which is focused by means of the objective lens 4 onto the recording medium 2, which is not illustrated here, and is reflected by it. The optics unit 21 also has detector elements for conversion of the beam reflected from the optical recording medium 2 into electrical signals. In comparison to conventional scanning units with a relatively short tracking movement, that is to say a shorter maximum possible deflection with respect to the track, the optical elements of the optics unit 21 can be adapted, and this can be done without major problems.

Figure 4 shows the scanning unit from Figure 1 in the form of a plan view. The same elements are provided with the same reference symbols.

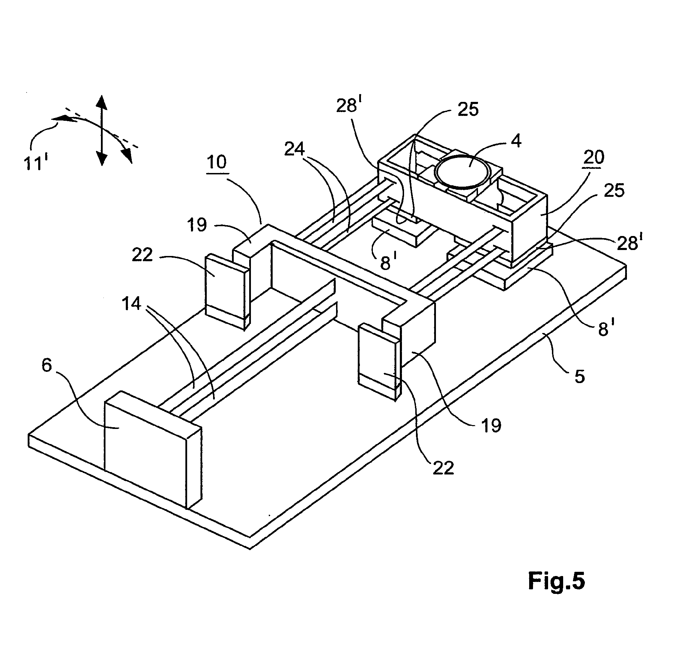

Figure 5 shows a three-dimensional view of a scanning unit according to the invention, in which a plurality of alternative embodiments of the invention are integrated. These need not necessarily be provided in conjunction with one another, but can also individually replace corresponding elements from the previous description.

Only a single pair of suspension elements 14 for attachment of the first partial element 10 are provided on the holding element 6. In contrast to the parallelogram arrangement in the previous figures, this allows a slight rotational movement of the first partial element 10. In contrast to a parallel movement as in the previous figures, the rotational movement makes it possible for the suspension means 24 to also act as a lever arm for the tracking movement, thus resulting in an increased movement range corresponding to the arrow 11', which is indicated in a curved form here. The curvature is in this case illustrated in an exaggerated form, and is chosen such that the scanning quality is not unacceptably adversely affected.

Permanent magnets 19 are provided as a balancing mass on the first partial element 10. Because the density of the magnetic material is greater, these have a smaller volume than the previously illustrated balancing masses 9. The permanent magnets 19 interact with coils 22 which are mounted on the base 5, in order to exert a force on the first partial element 10. Supply lines to the coils 22 are not illustrated here, but preferably run over the base 5 to the holding element 6. Printed coils 28' on the partial element 20 are fitted to the lower face of the holding plates 25. These interact with permanent magnets 8' which are arranged flat on the base 5. This arrangement makes it possible to allow a greater curved movement distance of the second partial unit 20 without any problems occurring with respect to separation or collision with the permanent magnets 8'. This arrangement also prevents the second partial element 20 from moving out of the optimum interaction range between the coils 28' and the permanent magnets 8. As an alternative to this, it is possible to dispense with the coils 28' and permanent magnets 8' if the suspension means 24 are designed to be self-deforming, for example in the form of bimetallic strips or piezo-elements, or are provided with other micromechanical actuators. This not only allows tipping in the focusing direction, but also in a tilting direction.

## Claims

1. Appliance for reading from and/or writing to optical recording media (2), having an optical scanning unit (1) which has an objective lens (4) which is suspended such that it can move in two degrees of freedom (11, 12), the scanning unit (1) has a first partial element (10) which is suspended to a holding element (6) such that it can move exclusively according to the first degree of freedom (11) relatively to said holding element (6), and a second partial element (20) which is suspended to said first partial element (10) such that it can move according to the second degree of freedom (12) relatively to said first partial element (10), **characterised in that** the first partial element (10) has an actuator (17) attached to it in order to produce an influence in the first degree of freedom (11), and the second partial element (20) has an actuator (28, 28') attached to it in order to produce an influence in the second degree of freedom (12) and the two elements are spatially separated.

2. Appliance according to Claim 1, **characterized in that** the first degree of freedom (11) corresponds to a tracking direction, and the second degree of freedom (12) corresponds to a focusing direction.

3. Appliance according to one of Claims 1 or 2, **characterized in that** the first partial element (10) is attached by means of at least one suspension element (14) to a base (5) which is designed such that it can move in the first degree of freedom (11) and is stiff in the other degrees of freedom (12, 13).

4. Appliance according to one of the preceding claims, **characterized in that** the second partial element (20) is attached to the first partial element (10) by means of at least one suspension means (24) which is designed such that it can move in the second degree of freedom (12) and is stiff in the other degrees of freedom (11, 13).

5. Appliance according to Claims 3 and 4, **characterized in that** the at least one suspension element (14) for the first partial element (10) allows a greater movement distance than the at least one suspension means (24) for the second partial element (20).

6. Appliance according to one of Claims 3 to 5, **characterized in that** the suspension element (14) for the first partial element (10) and/or the suspension means (24) for the second partial element (20) are/is a leaf spring.

7. Appliance according to one of the preceding claims, **characterized in that** the first partial element (10) has a balancing mass (9, 19) which is arranged opposite the point of action of the second partial element (20).

## Patentansprüche

1. Gerät zum Lesen und/oder Beschreiben optischer Aufzeichnungsträger (2) mit einer optischen Abtasteinheit (1), die eine in zwei Freiheitsgraden (11, 12) beweglich aufgehängte Objektivlinse (4) aufweist, die Abtasteinheit (1) ein erstes Teilelement (10) aufweist, welches ausschließlich entsprechend des ersten Freiheitsgrades (11) im Bezug zu einem ersten Halteelement (6) beweglich an diesem Halteelement (6) aufgehängt ist, und ein zweites Teilelement (20), welches entsprechend des zweiten Freiheitsgrades (12) im Bezug zu diesem ersten Teilelement (10) beweglich an diesem ersten Teilelement (10) aufgehängt ist, **dadurch gekennzeichnet, daß** das erste Teilelement (10) einen Aktuator (17) zur Beeinflussung entsprechend des ersten Freiheitsgrads (11) aufweist, und das zweite Teilelement (20) einen damit verbundenen Aktuator (28, 28') zur Beeinflussung entsprechend des zweiten Freiheitsgrads (12) aufweist und die beiden Elemente räumlich getrennt sind.

2. Gerät nach Anspruch 1, **dadurch gekennzeichnet, daß** der erste Freiheitsgrad (11) einer Spurfolgerichtung entspricht und der zweiten Freiheitsgrad (12) einer Fokussierungsrichtung.

3. Gerät nach einem der Ansprüche 1 oder 2, **dadurch gekennzeichnet, daß** das erste Teilelement (10) mittels zumindest eines Aufhängelements (14) an einer Basis (5) befestigt ist, welches entsprechend dem ersten Freiheitsgrad (11) beweglich und entsprechend anderer Freiheitsgrade (12, 13) steif ausgelegt ist.

4. Gerät nach einem der vorhergehenden Ansprüche, **dadurch gekennzeichnet, daß** das zweite Teilelement (20) mittels zumindest eines Aufhängemittels (24) an dem ersten Teilelement (10) befestigt ist, welches entsprechend dem zweiten Freiheitsgrad (12) beweglich und entsprechend anderer Freiheitsgrade (11, 13) steif ausgelegt ist.

5. Gerät nach Anspruch 3 und 4, **dadurch gekennzeichnet, daß** das zumindest eine Aufhängeelement (14) des ersten Teilelements (10) einen größeren Verstellweg ermöglicht, als das zumindest eine Aufhängemittel (24) des zweiten Teilelements (20).

6. Gerät gemäß einem der Ansprüche 3 bis 5, **dadurch gekennzeichnet, daß** das Aufhängeelement (14) für das erste Teilelement (10) und/oder das Aufhängemittel (24) für das zweite Teilelement (20) eine Blattfeder ist.

7. Gerät nach einem der vorhergehenden Ansprüche, **dadurch gekennzeichnet, daß** das erste Teilelement (10) eine gegenüber dem Angriffspunkt des zweiten Teilelements (20) angeordnete Ausgleichsmasse (9, 19) aufweist.

## Revendications

1. Appareil destiné à lire un support d'enregistrement optique (2) et/ou à écrire sur ce dernier, possédant une unité de balayage optique (1) dotée d'une lentille de focalisation (4) suspendue de sorte à pouvoir se déplacer selon deux degrés de liberté (11, 12), l'unité de balayage (1) possède un premier élément partiel (10) suspendu à un élément de support (6) de sorte à pouvoir se déplacer exclusivement selon le premier degré de liberté (11) par rapport audit élément de support (6) et un deuxième élément partiel (20) suspendu audit premier élément partiel (10) de sorte à pouvoir se déplacer selon le deuxième degré de liberté (12) par rapport audit premier élément partiel (10), **caractérisé en ce que** le premier élément partiel (10) possède un mécanisme d'accès (17) qui lui est fixé afin de produire une influence dans le premier degré de liberté (11), et le deuxième élément partiel (20) possède un mécanisme d'accès (28, 28') qui lui est fixé afin de produire une influence dans le deuxième degré de liberté (12) et les deux éléments sont séparés spatialement.

2. Appareil selon la revendication 1, **caractérisé en ce que** le premier degré de liberté (11) correspond à une direction de piste et **en ce que** le deuxième degré de liberté (12) correspond à une direction de focalisation.

3. Appareil selon une des revendications 1 ou 2, **caractérisé en ce que** le premier élément partiel (10) est fixé au moyen d'au moins un élément de suspension (14) à une base (5) conçue de sorte à pouvoir se déplacer selon le premier degré de liberté (11) et rigide dans les autres degrés de liberté (12, 13).

4. Appareil selon une des revendications précédentes, **caractérisé en ce que** le deuxième élément partiel (20) est fixé au premier élément partiel (10) au moyen d'au moins un moyen de suspension (24) conçu de sorte à pouvoir se déplacer selon le deuxième degré de liberté (12) et rigide dans les autres degrés de liberté (11, 13).

5. Appareil selon les revendications 3 et 4, **caractérisé en ce que** l'au moins un élément de suspension (14) du premier élément partiel (10) permet une distance de mouvement plus importante que l'au moins un moyen de suspension (24) du deuxième élément partiel (20).

6. Appareil selon une des revendications 3 à 5, **caractérisé en ce que** l'élément de suspension (14) du premier élément partiel (10) et/ou le moyen de suspension (24) du deuxième élément partiel (20) sont/est des/un ressort(s) à lames.

7. Appareil selon une des revendications précédentes, **caractérisé en ce que** le premier élément partiel (10) possède une masse centrifuge (9, 19) agencée à l'opposé du point d'action du deuxième élément partiel (20).
